# EUROPEAN PATENT SPECIFICATION

(11) **EP 1 470 343 B1**
(45) Date of publication and mention of the grant of the patent: **07.09.2005**
(21) Application number: 03734919.8
(22) Date of filing: 30.01.2003
(51) Int. Cl.: F16C 33/30, F16C 33/62

(54) **ROLLING BEARING HAVING CERAMIC ROLLING ELEMENT AND STEEL INNER OR OUTER RING**
WÄLZLAGER MIT KERAMISCHEM WÄLZELEMENT UND INNEN- ODER AUSSENRING AUS STAHL
ROULEMENT A ROULEAUX A ELEMENT ROULEAU EN CERAMIQUE ET BAGUE EXTERIEURE OU INTERIEURE EN ACIER

(30) Priority: 30.01.2002 NL 1019860
(43) Date of publication of application: 27.10.2004
(73) Proprietor: AB SKF, S-415 50 Göteborg (SE)
(72) Inventor: ZHOU, Xiao, Bo, NL-3994 LS Houten (NL)
(74) Representative: van Westenbrugge, Andries
(86) International application number: PCT/NL2003/000066
(87) International publication number: WO 2003/064874

(56) References cited:
- EP-A- 0 446 723
- WO-A-01/33091
- PATENT ABSTRACTS OF JAPAN vol. 0160, no. 57 (M-1210), 13 February 1992 (1992-02-13) & JP 3 255224 A (MITSUBISHI ELECTRIC CORP), 14 November 1991 (1991-11-14) cited in the application
- PATENT ABSTRACTS OF JAPAN vol. 0123, no. 86 (M-754), 14 October 1988 (1988-10-14) & JP 63 140120 A (MITSUBISHI HEAVY IND LTD; others: 01), 11 June 1988 (1988-06-11)
- PATENT ABSTRACTS OF JAPAN vol. 1995, no. 03, 28 April 1995 (1995-04-28) & JP 6 341445 A (SHOJIRO MIYAKE; others: 01), 13 December 1994 (1994-12-13)

## Description

The invention relates to a roller bearing comprising at least an inner or outer ring, a number of rolling elements and a cage, said inner or outer ring comprising ball bearing steel material and said rolling element comprising a ceramic material, wherein said inner or outer ring is coated with a solid lubricant coating

In many rolling bearing applications fluid lubricants such as grease and oil are not allowed to use. An example is a reactor of a polyethene processing plant, inside a CO₂ dyeing vessel for textile processing, vacuum and clean room environments for semi-conductor processing, instruments operated at ultra-high vacuum and aero-space. In these cases grease and/or oil particles could be highly contaminating and are not acceptable. However, if such rolling bearings run in a dry environment without fluid lubricant premature failure or even seizure might be expected due to adhesive wear, cold welding and heat generation from the high friction resulting.

To solve this problem the use of solid lubricant coatings has been proposed. Examples are PTFE coatings, molybdenum disulfide MoS₂ coatings, graphite coatings and diamond like carbon (DLC) coatings.

In the abstract of the Japanese patent application 03255224 the use of molybdenum disulfide on the raceway rings is disclosed.

DLC and (metal doped) MoS₂ have a strong adhesion to a steel substrate, with higher hardness, significant lower friction coefficient and therefore much higher wear resistance than those of conventional solid lubricants. Furthermore particle generation of such solid lubricant coatings is relatively low and there is no outgassing from the solid lubricants making them especially suitable for instruments operated at ultra-high vacuum and in clean room environments.

It is known in the art to coat roller elements with these solid lubricant coatings to improve service life of rolling bearings running under dry conditions.

However, it revealed that under severe circumstances such as in applications for pumps, sliding contacts and gears still premature damage can be observed.

Molybdenum disulfide as such is relatively soft material and has a low wearing resistance. It cannot withstand height loadings. In the atmosferic conditions errosion is a serious problem.

The invention aims to provide a rolling bearing to be used without a fluid lubricant which has improved loading properties.

According to the invention this aim is realised in that said solid lubricant coating comprises metal doped MoS₂.

According to the invention a rolling bearing is proposed having an inner and/or outer ring of ball bearing steel being provided with as metal doped MoS₂. To the use of metal doped MoS₂ a more particular titanium doped molybdenum disulfide the hardness of the lubricant considerably increases to getting with this wear resistance. The hardness of molybdenum disulfide as such has been found to be around 200 HV. If a metal is added hardnesses of 1000-2000 HV can be realised. Because of the presence of the metal in the molybdenum disulfide protection against oxidation is obtained.

The metal used such as titanium is preferably present in the quantity of 2-20% by weight and more particular about 10% by weight. The rolling element comprises a ceramic element. An example is a Si₃N₄ ceramic material.

The cage for the rolling element can comprise both a plastic and a metallic material. This is dependent from the surroundings in which the rolling bearing is used. Under extreme conditions a metallic cage being realised through powder metallic techniques would also be a feasible option.

Although the invention might be realised with a rolling element comprising a ball, according to a preferred embodiment the rolling element comprises a roller.

If a metal doped MoS₂ coating is used it will be understood that such coating is realised in a number of layers.

If a MoS₂ layer has to be provided on a steel substrate titanium is used as intermediate layer. So in this case a number of layers (10-100) can be provided.

According to a preferred embodiment of the invention the total coating thickness so obtained is between 0,1 and 4 micron and more particular between 1 and 2 micron. Depositing (PVD) is realised on the finished bearing component i.e. no further grinding or rehardening is effected after deposition of the coating.

The metallic inner or outer ring can comprise stainless steel material, i.e. steel having increased chromium and nickel content.

The ceramic material rolling element can also be coated with a solid lubricant coating.

## Claims

1. Roller bearing comprising at least an inner or outer ring, a number of rolling elements and a cage, said inner or outer ring comprising ball bearing steel material and said rolling element comprising a ceramic material, wherein said inner or outer ring is coated with a solid lubricant coating, **characterised in that** said solid lubricant coating comprises metal doped MoS₂.

2. Roller bearing according to claim 1, wherein said metal comprises titanium.

3. Roller bearing according to claim 1 or 2, wherein 2-20% by weight metal is provided in said lubricant coating.

4. Rolling bearing according to one of the preceding claims, wherein said rolling element comprises a Si₃N₄ material.

5. Rolling bearing according to one of the preceding claims, wherein said rolling element comprises a roller.

6. Rolling bearing according to one of the preceding claims, wherein said inner or outer ring comprises a stainless steel.

7. Rolling bearing according to one of the preceding claims, wherein said rolling element is coated with a solid lubricant coating.

8. Rolling bearing according to one of the preceding claims comprising lubricant grease.

## Patentansprüche

1. Wälzlager umfassend mindestens einen Innen- oder Außenring, eine Anzahl von Wälzkörpern und einen Käfig, wobei der Innen- oder Außenring Kugellagerstahl-Material und der Wälzkörper keramisches Material aufweist, wobei der Innen- oder Außenring mit einer Feststoffschmiermittelschicht beschichtet ist,
**dadurch gekennzeichnet,**
**daß** die Feststoffschmiermittelschicht MoS₂ dotiertes Metall aufweist.

2. Wälzlager nach Anspruch 1, wobei das Metall Titan aufweist.

3. Wälzlager nach Anspruch 1 oder 2, wobei die Schmiermittelschicht mit 2 - 20 % Massenanteil Metall versehen ist.

4. Wälzlager nach einem der vorherigen Ansprüche, wobei der Wälzkörper ein Si₃N₄-Material aufweist.

5. Wälzlager nach einem der vorherigen Ansprüche, wobei der Wälzkörper eine Rolle umfaßt.

6. Wälzlager nach einem der vorherigen Ansprüche, wobei der Innen- oder Außenring Edelstahl aufweist.

7. Wälzlager nach einem der vorherigen Ansprüche, wobei der Wälzkörper mit einer Feststoffschmiermittelschicht beschichtet ist.

8. Wälzlager nach einem der vorherigen Ansprüche enthaltend ein Schmierfett.

## Revendications

1. Roulement à rouleaux comprenant au moins une bague intérieure ou extérieure, un certain nombre d'éléments formant rouleaux et une cage, ladite bague intérieure ou extérieure étant en acier pour roulements à billes et ledit élément formant rouleau étant en matériau céramique, du type dans lequel ladite bague intérieure ou extérieure est revêtue d'une couche de lubrifiant solide, **caractérisé en ce que** ledit lubrifiant solide contient du MoS₂ dopé par un métal.

2. Roulement à rouleaux selon la revendication 1, **caractérisé en ce que** ledit métal comprennent de titane

3. Roulement à rouleaux selon l'une des revendications 1 ou 2, **caractérisé en ce que** ledit revêtement de lubrifiant contient 2-20% (poids) de métal.

4. Roulement à rouleaux selon l'une des revendications 1 à 3, **caractérisé en ce que** ledit élément formant rouleau contient un matériau du type Si₃N₄.

5. Roulement à rouleaux selon l'une des revendications précédentes, **caractérisé en ce que** ledit élément formant rouleau est un galet.

6. Roulement à rouleaux selon l'une des revendications précédentes, **caractérisé en ce que** ladite bague intérieure ou extérieure est en acier inoxydable.

7. Roulement à rouleaux selon l'une des revendications précédentes, **caractérisé en ce que** ledit élément formant rouleau est revêtu d'un lubrifiant solide.

8. Roulement à rouleaux selon l'une des revendications précédentes, comprenant une graisse lubrifiante.
